(19) Europäisches Patentamt
European Patent Office
Office européen des brevets

(11) EP 0 750 184 B1

# (12) EUROPÄISCHE PATENTSCHRIFT

(45) Veröffentlichungstag und Bekanntmachung des Hinweises auf die Patenterteilung:
**05.12.2001 Patentblatt 2001/49**

(51) Int Cl.$^7$: **G01M 15/00**

(21) Anmeldenummer: **96890107.4**

(22) Anmeldetag: **19.06.1996**

## (54) Verfahren und Einrichtung zur Diagnose mehrzylindriger Brennkraftmaschinen

Method and apparatus for diagnosing a multi-cylinder internal combustion engine

Procédé et dispositif pour le diagnostic des moteurs polycylindriques à combustion interne

(84) Benannte Vertragsstaaten:
**AT DE FR GB IT SE**

(30) Priorität: **22.06.1995 AT 33895**

(43) Veröffentlichungstag der Anmeldung:
**27.12.1996 Patentblatt 1996/52**

(73) Patentinhaber: **AVL List GmbH**
**8020 Graz (AT)**

(72) Erfinder:
- **Harms, Klaus-Christoph, Dr.**
  **8051 Graz (AT)**
- **Koegeler, Hans-Michael, Dipl.-Ing.**
  **8010 Graz (AT)**

(74) Vertreter: **Pinter, Rudolf, Dipl.-Ing. et al**
**Patentanwälte**
**Klein, Pinter & Laminger OEG**
**Prinz-Eugen-Strasse 70**
**1040 Wien (AT)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

EP 0 750 184 B1

Printed by Jouve, 75001 PARIS (FR)

## Beschreibung

Die Erfindung betrifft ein Diagnoseverfahren für mehrzylindrige Brennkraftmaschinen, wobei an zumindest einem kurbelgetriebenen Bauteil der Brennkraftmaschine für definierte Kurbelwinkelstellungen Winkelgeschwindigkeiten aufgenommen und daraus unter Berücksichtigung des jeweils wirksamen Gesamtträgheitsmomentes die jeweiligen Gesamtenergien bzw. dadurch repräsentierte Diagnosekenngrößen, wie insbesonders Einzelzylinder-Leistungsgrößen bzw. Einzelzylinder-Lastgrößen, bestimmt werden. Weiters betrifft die Erfindung auch ein Verfahren zur Erst-Einstellung bzw. zur bedarfsweisen Nach-Einstellung einer mittels eines derartigen Diagnoseverfahrens geprüften Brennkraftmaschine. Die Erfindung betrifft schließlich auch noch eine Einrichtung zur Diagnose mehrzylindriger Brennkraftmaschinen, mit zumindest einer Meßeinheit zur Bestimmung von Winkelgeschwindigkeiten an einem kurbelgetriebenen Bauteil der Brennkraftmaschine und einer damit in Verbindung stehenden Auswerteeinheit, in der unter Berücksichtigung von kurbelwinkelabhängigen Gesamtträgheitsmomenten Diagnosekenngrößen, wie insbesonders Einzelzylinder-Leistungsgrößen bzw. Einzelzylinder-Lastgrößen, ermittelt werden.

Verfahren bzw. Einrichtungen der genannten Art sind in verschiedenen Zusammenhängen, beispielsweise zur Erkennung von Zündaussetzern oder zur Gleichlaufregelung im Leerlauf, bekannt. Sie beruhen in vielen Fällen auf der Auswertung des Verlaufes der Kurbelwellen-Winkelgeschwindigkeit. So wird z.B. gemäß DE-A1 4 028 131 vorgeschlagen, die Zeitdauer für die Winkelspanne eines halben Zündabstandes vor dem oberen Totpunkt, also während die Kompressionsphase dominiert, mit der Zeitspanne zu vergleichen, die die Kurbelwelle benötigt um die gleiche Winkelspanne unmittelbar nach dem oberen Totpunkt zurückzulegen. Ab einer gewissen Abweichung dieser Zeitspannen wird auf einen Zündaussetzer am jeweiligen Zylinder entschieden. Weiters wurde gemäß EP-A 0 469 658 zur Beurteilung von Einzelzylinder-Leistungen generell eine Dreiteilung des Zündabstandes vorgesehen, um mit entsprechend wenigen Kurbelwinkelmarken die minimale und die maximale Winkelgeschwindigkeit anzunähern. Letztendlich wird dann die Einzelzylinder-Leistung am Anstieg der jeweiligen Winkelgeschwindigkeit in der Expansionsphase beurteilt.

Beide der genannten Methoden haben den unmittelbaren Nachteil, daß gleiche Abweichungen in den Einzelzylinder-Leistungen bei unterschiedlichen Drehzahlen zu unterschiedlich starken Abweichungen in den Winkelgeschwindigkeitsmaßen führen. Aus diesem Grunde ist man auch bei der Zündaussetzererkennung verschiedentlich dazu übergegangen, Differenzen in quadrierten, zylinderspezifischen Winkelgeschwindigkeitswerten als Rauhigkeitsmaßzahl heranzuziehen. So wird beispielsweise im SAE-Paper 930399 von M. Klenk et al gezeigt, daß damit bei Brennkraftmaschinen bis zu sechs Zylindern eine Zündaussetzererkennung im gesamten Kennfeld sichergestellt werden kann. Um dem Einfluß von Drehschwingungen der Kurbelwelle zu begegnen wird das Rauhigkeitsmaß einem kennfeldabhängigen Grenzwert gegenübergestellt, der allerdings zuvor experimentiell bestimmt werden muß. Trotzdem müssen schnelle Drehzahl- bzw. Lastwechselsituationen sowie beispielsweise Fahrten eines mit der geprüften Brennkraftmaschine ausgerüsteten Fahrzeuges auf unebener Straße von der Zündaussetzerüberwachung ausgenommen werden, da in diesen Fällen Antriebsstrangschwingungen angeregt werden, die nicht mehr durch einfache kennfeldabhängige Grenzwerte korrigiert werden können.

Weiters ist beispielsweise gemäß EP-A-0 434 665 bekannt, auf der Basis von einem oder mehreren Winkelgeschwindigkeitsverläufen (an mehreren Orten des Wellenstranges) ein Einzelzylinder-Leistungsmaß nach der sogenannten Energiepegelmethode aus dem Verlauf der gespeicherten kinetischen Energie zu ermitteln. Dabei werden einerseits der Massenkrafteinfluß und auch der Torsionsschwingungseinfluß grundsätzlich berücksichtigt und andererseits wird als Maßgröße ein sogenannter gemischter effektiver Mitteldruck berechnet, der es erlaubt, auch kleine Veränderungen von Einzelzylinderleistungswerten zu erkennen und nicht nur beispielsweise den Totalausfall eines Zylinders. In gewisser Weise nachteilig ist dabei allerdings der Umstand, daß nur jene Torsionsschwingungen kompensiert werden können, die innerhalb der gedachten Systemgrenzen ablaufen. D.h., sollte man Schwingungen im Antriebsstrang am Abtrieb der Brennkraftmaschine mitkorrigieren, so müßte der gesamte Antriebsstrang in das betrachtete System miteingeschlossen werden. Damit müßten allerdings auch entsprechend viele zusätzliche Winkelgeschwindigkeitsmessungen durchgeführt werden, was - neben der gewünschten Berücksichtigung der Torsionsschwingungen - auch zu einer Addition von Meßfehlern und damit nur bedingt zu Genauigkeitssteigerungen führen würde.

Aufgabe der vorliegenden Erfindung ist es, Verfahren bzw. Einrichtungen der eingangs genannten Art so zu verbessern, daß die erwähnten Nachteile der bekannten Verfahren bzw. Einrichtungen vermieden werden und daß insbesonders beispielsweise die Genauigkeit der ermittelten Diagnosekenngrößen für die Einzelzylinderbewertung so gesteigert werden kann, daß nicht nur eine Zündaussetzererkennung, sondern etwa auch eine unmittelbare Regelung der den einzelnen Zylindern zugeführte Kraftstoffmenge ermöglicht wird. Diese Aufgabe soll weiters nicht nur im Leerlauf sondern bei allen Motordrehzahleninsbesonders auch im Vollastbereich - gelöst werden, was speziell etwa bei Diesel-Brennkraftmaschinen sehr vorteilhaft ist, die ja bei Vollast mit minimalem Luftüberschuß betrieben werden. Wenn dieser minimale Luftüberschußwert in einzelnen Zylindern unterschritten wird, steigt der unerwünschte Schadstoffausstoß überproportional.

Die genannte Aufgabe wird gemäß der vorliegenden Erfindung bei einem Diagnoseverfahren der eingangs genannten Art dadurch gelöst, daß zusätzlich zu der bzw. den Winkelgeschwindigkeitsmessung(en) zumindest eine drehwinkel- oder zeitaufgelöste Drehmomentmessung an einer abtriebsseitigen Systemgrenze vorgenommen und der dadurch repräsentierte jeweilige Energietransport über diese Systemgrenze bei der Bestimmung der Diagnosekenngrößen berücksichtigt wird. Die erfindungsgemäße Einrichtung zur Diagnose mehrzylindriger Brennkraftmaschinen zeichnet sich demgemäß dadurch aus, daß zumindest eine weitere Meßeinheit zur drehwinkel- oder zeitaufgelösten Drehmomentmessung an einer abtriebsseitigen Systemgrenze vorgesehen und ebenfalls mit der Auswerteeinheit verbunden ist.

Beim eingangs erwähnten Verfahren zur Erst-Einstellung einer mittels eines beschriebenen Diagnoseverfahrens geprüften Brennkraftmaschine ist gemäß der Erfindung entsprechend vorgesehen, daß mit Hilfe der auf einem Produktionsprüfstand ermittelten korrigierten Diagnosekenngrößen eine Grundeinstellung von geprüften Serien-Brennkraftmaschinen vorgenommen wird. Zur bedarfsweisen Nach-Einstellung einer mittels eines erfindungsgemäßen Diagnoseverfahrens geprüften Brennkraftmaschine wird mit Hilfe der auf einer Belastungseinrichtung bzw. on-board ermittelten korrigierten Einzelzylinder-Diagnosekenngrößen eine Einstellung von Einzelzylinder-Einspritzmengen auf einen Zielwert vorgenommen.

Während aus der (bzw. den) Winkelgeschwindigkeitsmessung(en) Differenzen ermittelt werden können, die der Änderung der gespeicherten Energie innerhalb des betrachteten Systems infolge der Gaswirkungen einzelner Zylinder entsprechen, wird durch die zusätzlich Drehmomentmessung - vorzugsweise nach dem Schwungrad der Brennkraftmaschine - der zugehörige augenblickliche Energietransport über diese Systemgrenze erfaßt und in Rechnung gestellt. Damit wird man in vorteilhafter Weise unmittelbar von der Annahme unabhängig, daß das Drehmoment am Schwungrad im Zündabstand periodisch ist. Dies ist nämlich genau dann nicht der Fall, wenn z.B. im Antriebsstrang Torsionsschwingungen auftreten, oder aber Rückwirkungen von einer unebenen Fahrbahn oder dgl. der Brennkraftmaschine ein stark schwankendes Drehmoment abverlangen.

Die Erfindung stellt also eine wesentliche Verbesserung bzw. Verallgemeinerung der oben angesprochenen "Energiepegelmethode" dar. Diese vielseitig - und nicht nur etwa zur Einzelzylinder-Leistungsmessung - verwendbare, auf der Berechnung der im jeweiligen System aktuell gespeicherten Energie beruhende Methode wird verbessert, indem nicht nur der Energiepegelverlauf nach dem Stand der Technik sondern zusätzlich ein Drehmomentverlauf an einer Systemgrenze ausgewertet werden. Damit können auf erwähnte Weise Schwankungen der Antriebsstrangtorsion und des von außen auf die Brennkraftmaschine rückwirkenden Lastmomentes berücksichtigt werden, sodaß der erhaltene korrigierte Energiepegelverlauf praktisch ausschließlich von den wirkenden Gaskräften und der Reibung bestimmt ist.

Als Diagnosekenngrößen im angesprochenen Sinne sind hier nun eine Reihe diagnostischer Größen zu verstehen, wie sie z.B. in der Indiziertechnik aus der Gesamtheit der gemessenen Brennraumdruckverläufe aller Zylinder abgeleitet werden können bzw. mit diesen in ursächlichem Zusammenhang stehen. Der erwähnte korrigierte Energiepegelverlauf bzw. der entsprechende Verlauf des korrigierten Moments enthält diagnostische Informationen über die gesamte Brennkraftmaschine und gleichzeitig auch über die einzelnen Zylinder; unter anderem bezüglich Drehmoment bzw. -leistung, Reibmoment bzw. -leistung, Kompression und Ladungswechsel. Zu all diesen "Zylinderdruckeffekten" können unter Nutzung des angesprochenen erfindungsgemäß verbesserten Verfahrens bzw. der entsprechenden Einrichtung diagnostische Aussagen gemacht werden, was insbesonders für Produktionsprüfungsanwendungen durch die Betrachtung des korrigierten Verlaufes der gespeicherten Energie bzw. von dessen Ableitung von Bedeutung ist.

In bevorzugter Ausgestaltung des erfindungsgemäßen Diagnoseverfahrens ist vorgesehen, daß zur Drehmomentmessung der jeweilige Verdrehwinkel zwischen einem auf der Kurbelwelle der Brennkraftmaschine angeordneten Schwungrad und einer nachgeschalteten Belastungseinrichtung gemessen und zusammen mit der Federkonstanten eines zwischen Schwungrad und Belastungseinrichtung liegenden elastischen Antriebsstrangelementes ausgewertet wird. Die Kalibrierung der Federkonstanten kann dabei bevorzugt anhand des mittleren Verdrehwinkels und eines zusätzlichen Maßes für den Mittelwert der Motorlast erfolgen. Dies ergibt eine sehr einfache Ausgestaltung des Verfahrens, wobei eine vorteilhafte Weiterbildung der erfindungsgemäßen Einrichtung auch vorsehen kann, daß die weitere Meßeinheit zur Drehmomentmessung mit der Meßeinheit zur Winkelgeschwindigkeitsmessung zusammengefaßt ist.

Die Verdrehwinkelmessung zur Drehmomentmessung kann nach einer anderen Weiterbildung des erfindungsgemäßen Diagnoseverfahrens auch über einen Schaltkupplungsbelag erfolgen, wobei bei dauerhaft auftretendem Schlupf bei hoher Last ein frühzeitiger Kupplungsverschleiß diagnostiziert werden kann. Auf diese Weise können also auch zusätzliche, über die erwähnten Zylinderdruckeffekte hinausgehende Diagnoseaussagen gewonnen werden.

In weiters bevorzugter Ausgestaltung der Erfindung werden Differenzverläufe zwischen den Verläufen der korrigierten Diagnosekenngrößen der jeweils geprüften und einer als gut befundenen Brennkraftmaschine ausgewertet, wobei zur Entscheidung ob ein Fehler vorliegt, statistische Hilfsmittel - wie z.B. Gutzustandsstreubänder - herangezogen werden können.

Zum Ausgleich von höherfrequenten Torsionsschwingungen innerhalb des Kurbeltriebes kann in bevorzugter weiterer Ausgestaltung der Erfindung auch vorgesehen sein, daß die aufgenommene Schwungradwinkelgeschwindigkeit tiefpaßgefiltert wird.

Als weitere Ausgestaltungsform kann auch nach der Berechnung eines zunächst durch hochfrequente Kurbelwellendrehschwingungen verfälschten Einzelzylinderdrehmomentmaßes, das alleine aus der Schwungradwinkelgeschwindigkeit und der Drehmomentenmessung berechnet wurde, eine Korrektur der Ergebnisgröße mit einem Korrekturkennfeld erfolgen. Dieses Korrekturkennfeld muß nur einmalig pro Motortype-Kupplungskombination erstellt werden. Bei alleiniger Auswertung der Schwungradwinkelgeschwindigkeit - ohne die kombinierte Auswertung von Winkelgeschwindigkeit und Drehmoment - existiert ein derartiges Korrekturkennfeld aber nicht: Unterschiedliche Einzelzylinderdrehmomentbeiträge beeinflussen nämlich den Anregungszustand im niedrigen Frequenzbereich, in dem die Kupplungstorsionsschwingungen ablaufen. Damit hängt die Heftigkeit der Kupplungstorsionsschwingungen und damit ihr verfälschender Einfluß auf die Ergebnisgröße davon ab, ob die Zylinder gleichmäßig arbeiten - oder nicht. Das heißt, daß auch das Korrekturkennfeld davon abhängen muß, sodaß es nicht einmalig bestimmt werden kann.

In weiterer Ausgestaltung des erfindungsgemäßen Diagnoseverfahrens können aus den Verläufen von korrigierten Einzelzylinder-Diagnosekenngrößen Zündaussetzer einzelner Zylinder bestimmt werden.

Besonders vorteilhaft ist eine Weiterbildung des erfindungsgemäßen Diagnoseverfahrens, gemäß welcher die Brennkraftmaschine bei diesem Verfahren zündungslos geschleppt wird, da damit einfach und schnell diagnostiziert werden kann (Kaltprüfung).

Für die Auswertung bzw. Erhöhung der Aussagekraft des erfindungsgemäßen Diagnoseverfahrens von Vorteil ist eine weitere Ausgestaltung, gemäß welcher mindestens ein Winkelgeschwindigkeitsverlauf im Bereich eines modalen Schwingungsknotens der Kurbelwelle aufgenommen wird.

In bevorzugter weiterer Ausgestaltung der Erfindung ist vorgesehen, daß zur Steuerung bzw. Regelung einer in Betrieb befindlichen Brennkraftmaschine eine adaptive Einstellung von Parametern und/oder Zielwerten der Steuerung bzw. Regelung mit Hilfe der on-board ermittelten korrigierten Einzelzylinder-Diagnosekenngrößen vorgenommen wird.

Eine weitere Ausgestaltung der erfindungsgemäßen Einrichtung ist schließlich entsprechend gekennzeichnet durch eine Verbindung mit einem Motormanagementsystem zur adaptiven Einstellung von Parametern und/oder Zielwerten für die Steuerung bzw. Regelung der Brennkraftmaschine.

Unter der Voraussetzung der Gleichmäßigkeit von Reibmoment, Kompression und Ladungswechsel kann gemäß der Erfindung also sehr einfach ein Einzelzylinder-Drehmoment ermittelt werden, was beispielsweise für die erwähnten on-board-Anwendungen zur "Zylindergleichstellung" sehr wichtig ist. Dieses Einzelzylinderdrehmoment erlaubt weiters insbesonders diagnostische Schlüsse auf die allgemeine Funktion des Einspritzsystems einer Brennkraftmaschine, die eingespritzte Kraftstoffmenge selbst, sowie eventuelle Zündaussetzer.

Bevorzugte Einsatzgebiete für die beschriebenen erfindungsgemäßen Verfahrensausgestaltungen bzw. die entsprechenden Einrichtungen sind Produktionsprüfstände mit geschleppter Brennkraftmaschine (Kalttest), Produktionsprüfstände mit gefeuerter Brennkraftmaschine sowie on-board-Anwendungen. Im Werkstattbereich wird dagegen im allgemeinen im Leerlauf der Brennkraftmaschine getestet, sodaß dort die einfache, unkorrigierte Energiepegelmethode nach dem Stande der Technik zumeist ausreichend sein wird.

Es kann damit beispielsweise die erwähnte Erst-Einstellung einer Brennkraftmaschine am Produktionsprüfstand erfolgen; andererseits kann - zweckmäßigerweise unter Nutzung von on-board-Einrichtungen für die Ermittlung von $E(\alpha)$ und/oder $M(\alpha)$ - eine Nacheinstellung der Brennkraftmaschine (fallweise, periodisch, laufend), eine Regelung (eventuell adaptiv) oder eine Diagnose durchgeführt werden. Zur Auswertung der "korrigierten Energiepegelverläufe" können entweder absolute Kenngrößen ermittelt oder aber relative Kenngrößen von einerseits zu testender Brennkraftmaschine und andererseits bekannter Brennkraftmaschine im Gutzustand erfolgen. Weiters können Differenzverläufe und/oder Differenzkenngrößen von unbekannt und bekannt (gut) berechnet oder statistische Methoden und Maße wie etwa Streubänder, Zuverlässigkeitsbereiche, etc. genutzt werden.

Das zur erwähnten Korrektur dienende, zusätzlich ermittelte Drehmoment kann mit üblichen, bekannten Drehmomentsensoren bestimmt oder - auf jedenfalls an sich bekannte Art - aus dem Verdrehwinkel eines drehelastischen Teiles des Antriebstranges ermittelt werden. Vorteilhaft kann dabei wie erwähnt fallweise, periodisch oder laufend eine Kalibrierung der Federkonstanten aus einer bekannten mittleren Motorlast erfolgen, womit mit vorhandenen meßtechnisch geringwertigen Bauteilen der erforderliche dynamische Anteil am Motordrehmoment ermittelbar ist, ohne hochpräzise, teure und platzraubende Drehmomentmeßwellen oder dgl. einsetzen zu müssen. Zu beachten ist, daß eine derartige lineare Kalibrierung im wesentlichen nur im Bereich des betreffenden Arbeitspunktes (Lastpunktes) gilt wenn die Federlinie selbst nicht linear ist.

Falls zur zusätzlichen Drehmomentmessung auf erwähnte Weise die Elastizität der Kupplung der Brennkraftmaschine verwendet wird, muß auch der Schlupf überwacht bzw. ausgeschlossen werden und insbesonders auch die Wellenverdrehung beim Auskuppeln berücksichtigt werden. Verbleibt dagegen nach dem Einkuppeln ein Restschlupf, so kann aus diesem auf Kupplungsverschleiß geschlossen werden.

In weiterer Folge wird die Erfindung an Hand eines Beispiels von einem LKW-Motor erläutert:

Fig. 1 zeigt die Abgrenzung des betrachteten Systems.

Fig. 2 zeigt die inneren Mitteldruckwerte von 8 Zylinderdruckverläufen, die als Eingabe in eine Drehschwingungssimulationsrechnung dienen.

Fig. 3 zeigt als Ergebnis der Drehschwingungssimulation in der Form der Winkelgeschwindigkeitsverläufe an den Orten, an denen die Winkelgeschwindigkeit meßbar ist. Zusätzlich ist der Verlauf des Schnittmomentes zwischen Schwungrad und Bremse aufgetragen.

Fig. 4 zeigt Energiepegelverläufe, und zwar in einem Fall auf der Basis des Schwungradwinkelgeschwindigkeitsverlaufes und im anderen Fall erfindungsgemäß korrigiert.

Fig. 5 zeigt das jeweilige Ergebnis der Einzelzylinderdrehmomentenbewertung im Vergleich mit der absoluten Abweichung der pi-Werte von ihrem Mittelwert über alle Zylinder.

Fig. 6 zeigt eine vorzugsweise Einrichtung in der das Verfahren zur Regelung von Einzelzylindereinspritzmengen genutzt wird. Dabei wird das Drehmomentensignal aus zwei Winkelgeschwindigkeitssignalen - beiderseits des elastischen Zwischenelements zwischen Schwungrad und Belastungseinrichtungin selbstkalibrierender Art und Weise berechnet.

Figur 1 zeigt die Abgrenzung des betrachteten Systems. Demnach wird die Brennkraftmaschine unmittelbar nach dem Schwungrad vom Rest des Antriebsstranges - im Fall des Beispieles: von der Prüfstandsbremse - abgetrennt.

Innerhalb des so definierten "offenen mechanischen Systems" gilt - für ein beliebiges Winkelintervall: $\Delta\alpha=\alpha_2 - \alpha_1$ - die folgende Energiebilanz:

$$W_i\Big/_{\Delta\alpha} + W_r\Big/_{\Delta\alpha} = \Delta E_{gesamt}\Big/_{\alpha_1}^{\alpha_2} - \int_{\alpha_1}^{\alpha_2} M_{außen(\alpha)}\cdot d\alpha \quad \text{.......... Gl. 1a}$$

Dabei bedeuten:

Indices:

| | |
|---|---|
| i | innere, von den Gaskräften aller Zylinder herrührend |
| j | Zylinderindex |
| r | in Folge von allen Reibungsanteilen innerhalb der Systemgrenze |
| außen ..... | von der Belastungseinrichtung her wirkend (positiv, wenn Motor geschleppt wird) |

Formelzeichen:

W Arbeit

M Moment

$$W_x\Big/_{\Delta\alpha} = \int_{\alpha_1}^{\alpha_2} M_{x(\alpha)}\cdot d\alpha$$

E Energie

$$\Delta E\Big/_{\alpha_1}^{\alpha_2} = E_{(\alpha_2)} - E_{(\alpha_1)}$$

$E_{gesamt}$ = Summe aller Teilenergien, die innerhalb der Systemgrenzen gespeichert sind (siehe EP 0434665 A1, Gl. 8, S 9 oben)

Andererseits kann der Verlauf der Arbeiten in Folge der Gaskräfte und der Motorreibung auch als Funktion des Kurbelwinkels dargestellt werden. Dazu wird $\alpha_2 = \alpha$ gesetzt und von einem beliebigen Startwert $\alpha_0$ aus variiert.

$$\int_{\alpha 0}^{\alpha} \left(M_i + M_r\right)_{(\alpha)}\cdot d\alpha = E_{gesamt(\alpha)} - E_{gesamt(\alpha 0)} - \int_{\alpha 0}^{\alpha} M_{außen} d\alpha \quad \text{.......... Gl. 1b}$$

Dieser Verlauf steigt - bei gefeuertem Motor - mit dem Kurbelwinkel stark an. Aus den Differenzen in diesem Verlauf kann einerseits der Absolutwert für den "gemischten effektiven Mitteldruck" für jeden einzelnen Zylinder berechnet werden.
(Vgl. Gl. 12)
Differenziert man Gleichung 1b nach $\alpha$, so läßt sich andererseits der Verlauf der aufsummierten Gaskraftdrehmomente zuzüglich des Motorreibmomentes direkt errechnen:

$$(M_i + M_r)_{(\alpha)} = \frac{dE_{gesamt(\alpha)}}{d\alpha} - M_{außen(\alpha)} \qquad \text{Gl. 2}$$

An Hand dieses Verlaufes lassen sich die Gaskraftwirkungen der einzelnen Zylinder besonders deutlich überwachen. Vergleiche, ob solche Verläufe innerhalb eines Gutzustandsstreubandes liegen, sind insbesondere in der Produktionsprüfung von Motoren zweckmäßig. Auch hier verfälschen oft Antriebsstrangschwingungen das Diagnoseergebnis; wenn es entweder nur auf einer Winkelgeschwindigkeitsmessung oder nur auf einer Drehmomentmessung beruht. Dies gilt insbesondere für Kalttestverfahren, bei denen der Verbrennungsmotor bei niedriger Drehzahl geschleppt wird, die meist in der Nähe der Resonanzfrequenz der Einheit "Motor - Kupplung - Antriebseinrichtung" liegt.
Verwendet man

$$\overline{M_{außen}} = \frac{1}{4\pi}\int_{\alpha_0}^{\alpha_0+4\pi} M_{außen} \cdot d\alpha \qquad \text{(beim 4 Taktmotor)}\ldots\ldots\ldots\ldots \text{Gl. 3}$$

und

$$M_Abw_{außen(\alpha)} = M_{außen(\alpha)} - \overline{M_{außen}} \qquad \text{Gl. 4}$$

so läßt sich ein "korrigierter Energiepegelverlauf" berechnen:

$$\int_{\alpha_0}^{\alpha} \left(Mi_{(\alpha)} + M_r + \overline{M_{außen}}\right) \cdot d\alpha = E_{gesamt(\alpha)} - E_{gesamt(\alpha_0)} - \int_{\alpha_0}^{\alpha} M_Abw_{außen(\alpha)} d\alpha \ldots\ldots\ldots \text{Gl. 5}$$

Er entspricht dem Verlauf der gespeicherten Energie beim Stationärbetrieb eines Motors, wenn das äußere Drehmoment konstant ist. Aus geeigneten Differenzbildungen in diesem Verlauf kann die Abweichung des "inneren Mitteldruckes" für jeden Zylinder vom mittleren pi-Wert aller Zylinder berechnet werden (vgl. Gl. 13).
Figur 2 zeigt Werte für indizierte Mitteldrücke, eines 8 Zylinder LKW-Motors. Der Zylinderdruckverlauf von Zylinder 1 wurde mit 0,95 multipliziert, so daß sich der pi-Wert für Zylinder 1 - im Vergleich zu den pi-Werten der Zylinder 2 bis 8, die alle gleich sind, ebenfalls um 5 % reduzierte.
Weiters ist in Fig. 2 auch die Abweichung dieser pi-Werte vom gemeinsamen Mittelwert in Balkenform dargestellt (delta_pi). Zur Gleichstellung von Kraftstoffmengen müssen diese Abweichungen möglichst klein gehalten werden. Das heißt, daß die Meßgröße für diese Abweichung in hoher Genauigkeit vorliegen muß, so daß beispielsweise eine Minderleistung eines Zylinders um 5 % deutlich abgebildet sein muß.
Weil diese Maßgröße aus einfach und dauerhaft meßbaren Signalen berechnet werden muß, sind in Figur 3 die Winkelgeschwindigkeitsverläufe, so wie sie am freien Motorende ("om_f"), am Schwungrad ("om_S") und auf der Belastungseinrichtung (om_B) zu erwarten sind, sowie das Drehmoment ("-$M_{außen}$"), das von der Kupplung übertragen wird, dargestellt.
Diese Ergebnisse stammen aus einer Simulationsrechnung bei 1400 1/min, wobei auf der Belastungseinrichtung ("Prüfstandsbremse") ein sinusförmiges, störendes Drehmoment angreift. Dieses Erregermoment hat eine Amplitude von 200 Nm und die Periodendauer eines Motorzyklusses - es stellt eine denkbare Rückwirkung dar, wie sie von einem LKW-Antriebsstrang - beispielsweise bei einem Anfahrvorgang oder auf unebener Fahrbahn - ohne weiters ausgehen kann.

Durch diese Rückwirkung kann - alleine aus den Winkelgeschwindigkeitsverläufen - kein brauchbares Maß für die Einzelzylinderleistung abgeleitet werden. Wird der Energiepegelverlauf aber erfindungsgemäß mit der Drehmomentmessung an der Systemgrenze korrigiert (Gl. 5), so kann die Wirkung der Gaskraftdrehmomente abzüglich der Reibungsmomente in voller Winkelauflösung dargestellt werden:

Figur 4 zeigt zur Veranschaulichung zwei Energiepegelverläufe ("E_S" und "E_f_S_M"), die aus den Ergebnissen der Drehschwingungssimulationsrechnung abgeleitet sind, im Vergleich zum Energiepegelverlauf, der sich für ein starr angesetztes und nicht erregtes System ergibt (E_starr):
"E_S" wurde alleine auf der Basis der Schwungradwinkelgeschwindigkeit ($\omega_s$) berechnet:

$$E_S = \frac{I_{s(\alpha)} \cdot \omega_{s(\alpha)}^{\ 2}}{2} \qquad \text{Gl. 6}$$

mit

$$I_{S(\alpha)} = I_{rot0} + I_{os(\alpha)} \qquad \text{Gl. 7}$$

wobei $I_{rot0}$ = Summe aller Teilträgheitsmomente innerhalb der Systemgrenzen (rotierende Massen)

und

$I_{os(\alpha)}$ Trägheitsanteil zur Berücksichtigung der oszillierenden Massen (siehe EP 0434 665A1, Seite 5 / Zeile 34 bis Seite 6 / Zeile 43).

Zur Bewertung dieses Ergebnisses ist als Referenz der Verlauf E_starr eingetragen:

$$E_{_starr(\alpha)} = \frac{I_{s(\alpha)} \cdot \omega_{starr(\alpha)}^{\ 2}}{2} \qquad \text{Gl. 8}$$

wobei gilt:
$I_{s(\alpha)}$ nach Gl. 7 und

$\omega_{starr}$ Ergebnis einer Simulationsrechnung bei der die Kurbelwelle starr und das Drehmoment am Schwungrad konstant war.

Wie Figur 4 zeigt, stellt E_S den Verlauf der gespeicherten Energie nicht korrekt dar: - Torsionsschwingungen in der Kurbelwelle verfälschen die Amplitude in der Zündfrequenz und Torsionsschwingungen in der Kupplung - angeregt durch das ungleichförmige Lastmoment - sorgen sogar für eine Energiezunahme im Expansionsbereich von Zylinder 1, der ja in diesem Beispiel um 5 % schwächer ist, als die anderen.

Dagegen zeigt der Verlauf "E_f_S_M" eine sehr gute Annäherung an den Verlauf von E_starr, der ja direkt von den Gaskräften abzüglich der Motorreibung geprägt ist:

$$E_{f,S,M(\alpha)} = \frac{I_{S(\alpha)} \cdot \omega_{S(\alpha)}^{\ 2}}{2} + \frac{I_f \cdot \omega_{f(\alpha)}^{\ 2}}{2} - \int_0^{\alpha} M_Abw_{(\alpha)} d\alpha \ \ldots\ldots \text{Gl. 9}$$

hier gilt:

$$I_{S(\alpha)} = I_{S0} + I_{os(\alpha)} \qquad \text{Gl. 10}$$

wobei:

$I_{so}$ otierender Anteil des schwungradseitigen Trägheitsmomentes
$I_{os(\alpha)}$ Trägheitsmomentenanteil zur Berücksichtigung der oszillierenden Massen (siehe EP 0434665A1, Seite 5 / Zeile 34 bis Seite 6 / Zeile 43).

$I_f$ ..... rotierender Anteil des Motorträgheitsmomentes am freien Motorende, wobei die Summe aller Teilträgheitsmomente innerhalb des betrachteten Systems näherungsweise anhand der Lage des Schwingungsknotens für die erste Kurbelwellenfrequenz auf die Meßorte

f freies Kurbelwellenende und
S Schwungrad

aufgeteilt werden.

z.b. Massenerhaltung:

$$\sum_{k=1}^{n} I_k = I_S + I_f$$

und

Impulserhaltung:

$$\sum_{k=1}^{n} I_k \cdot \psi_k = I_S \cdot \psi_S + I_f \cdot \psi_f$$

mit $\psi_k$ Eigenform des n-Massensystems zu einer relevanten Eigenfrequenz.

So eine 2-Massenaufteilung kann als Näherung für das reale Drehschwingungssystem aufgefaßt werden, das wesentlich mehr Teilmassen und Freiheitsgrade aufweist.

$$pe*_j = \frac{1}{Vh} \cdot \left( \Delta E_{gesamt} \Big/_{\alpha_{OTj}}^{\alpha_{OTj-1}} - \int_{\alpha_{OTj}}^{\alpha_{OTj+1}} M_{außen} \cdot d\alpha \right) \quad \text{Gl. 12}$$

Dabei bedeutet:

$pe*_j$ ....."gemischter effektiver Mitteldruck" für den Zylinder "j"

$\alpha_{OTj}$ .....Kurbelwinkel im Zünd OT des Zylinders "j"

$\alpha_{OTj+1}$ .....Kurbelwinkel im Zünd OT des Zylinders "j+1"

Zur Bewertung von unterschiedlichen Einspritzmengen wird vorzugsweise die Abweichung vom Mittelwert aller pe* Werte: delta_pe*$_j$ berechnet:
Weil sich $p_i$ und $p_e$ nur um $p_r$ unterscheiden, das ja dem Anteil eines Zylinders an der Motorgesamtreibung entspricht und definitionsgemäß für alle Zylinder gleich ist, gilt:

$$\text{delta_pe}*_j = \text{delta_pi}*_j \cong \text{delta_pi}_j \quad \text{Gl. 13}$$

mit den Indizes:

e .....effektiver
i .....innerer

r .....auf Grund der Motorreibung

beziehungsweise:

$$delta_pe^*_j = \frac{1}{Vh}\left[\Delta E_{gesamt}\Big/_{\alpha_{OTj}}^{\alpha_{OTj+1}} - \int_{\alpha_{OTj}}^{\alpha_{OTj+1}} M_Abw_{außen(\alpha)} \cdot d\alpha\right] \text{..........................Gl. 14}$$

Weil die Kurbelwellentorsionsschwingungen hochfrequent sind, können hier weiters die Werte für $E_{gesamt\ (\alpha OTj)}$ alleine auf der Basis einer tiefpaßgefilterten bzw. stark geglätteten Schwungradwinkelgeschwindigkeit mit guter Näherung berechnet werden: Wie Fig. 4 zeigt, kann bereits diese erste näherungsweise Berücksichtigung der Kurbelwellentorsionsschwingungen den Großteil der hochfrequenten Fehler in der Energiepegelverlaufsberechnung von "E_S" beseitigen. - Demgegenüber gleicht die Berücksichtigung des Drehmomentes an der Systemgrenze die niederfrequenten Drehschwingungen aus, die abtriebsseitig den Winkelgeschwindigkeitsverlauf des Schwungrades beeinflussen. Insgesamt kann also mit dem Verlauf ($E_{f,S,M}$) die Auswirkung der Gaskräfte - auch an einem stark schwingenden System, wie es in der Realität oft vorliegt - fast vollständig rekonstruiert werden; und zwar mit einfachen Rechenoperationen, die entweder in einem Auswertegerät, in einem Motormanagementsystem oder sogar direkt in einer Sensoreinheit ablaufen können.

Somit erkennt man an Fig. 4 die hohe Bedeutung der gemeinsamen Auswertung von Winkelgeschwindigkeit (en) und Drehmoment für alle jene Anwendungen, bei denen die Annahme eines konstanten - oder zumindest streng im Zündabstand periodischen - Drehmomentes an der Systemgrenze nicht erfüllt ist.

Darüber hinaus zeigt Fig. 5, daß man speziell zur Bewertung von Abweichungen in der Einzelzylinderleistung - beispielsweise zur Gleichstellung von Einspritzmengen - durch die kombinierte Auswertung von Winkelgeschwindigkeit und Drehmoment entscheidende Genauigkeitsvorteile erreicht, so daß eine Anwendung in Regelungssystemen überhaupt erst ermöglicht wird.

Dabei kann die Genauigkeit der Ergebnisse noch dadurch gesteigert werden, daß zylinderspezifische Fehler, die in erster Linie vom Betriebszustand abhängen (z.B. verbleibende Fehler in Folge von hochfrequenten Torsionsschwingunggen),über ein motorspezifisches Korrekturkennfeld bereinigt werden.

Als Maß für die Einzelzylinderleistung wird der sogenannte "gemischte effektive Mitteldruck" ($pe^*_j$) für jeden Zylinder "j" berechnet (siehe z.B.auch EP 0434665A1, Seite 3, Zeile 48 bis Seite 7, Zeile 27).

Für Motoren mit konstantem Zündabstand gilt:

$$pe^*_j = \frac{1}{Vh}\cdot\left(\Delta E_{gesamt}\Big/_{\alpha_{OTj}}^{\alpha_{OTj+1}} - \int_{\alpha_{OTj}}^{\alpha_{OTj+1}} M_{außen} \cdot d\alpha\right) \text{.......................................................Gl. 12}$$

Dabei bedeutet:

$pe^*_j$ ....."gemischter effektiver Mitteldruck" für den Zylinder "j"

$\alpha_{OTj}$ .....Kurbelwinkel im Zünd OT des Zylinders "j"

$\alpha_{OTj+1}$ .....Kurbelwinkel im Zünd OT des Zylinders "j+1"

Zur Bewertung von unterschiedlichen Einspritzmengen wird vorzugsweise die Abweichung vom Mittelwert aller pe* Werte: $delta_pe^*_j$ berechnet:
Weil sich $p_i$ und $p_e$ nur um $p_r$ unterscheiden, das ja dem Anteil eines Zylinders an der Motorgesamtreibung entspricht und definitionsgemäß für alle Zylinder gleich ist, gilt:

$$delta_pe^*_j = delta_pi^*_j \cong delta_pi_j \qquad \text{Gl. 13}$$

mit den Indizes:

e .....effektiver
i .....innerer
r .....auf Grund der Motorreibung

beziehungsweise:

$$delta_pe^*_j = \frac{1}{Vh}\left[\Delta E_{gesamt}\Big/_{\alpha_{OTj}}^{\alpha_{OTj-1}} - \int_{\alpha_{OTj}}^{\alpha_{OTj-1}} M_Abw_{außen(\alpha)} \cdot d\alpha\right] \text{.......................... Gl. 14}$$

Weil die Kurbelwellentorsionsschwingungen hochfrequent sind, können hier weiters die Werte für $E_{gesamt\ (\alpha OTj)}$ alleine auf der Basis einer tiefpaßgefilterten bzw. stark geglätteten Schwungradwinkelgeschwindigkeit mit guter Näherung berechnet werden:

$$E_{gesamt(\alpha OTj)} \cong \frac{\overline{I_S} \cdot \overline{\omega_{Sj}}^2}{2} \qquad \text{Gl. 15}$$

mit $\overline{I_s}$ = Mittelwert von $I_s$ nach Gl. 7 - - maximal im Intervall von

$$\alpha_{OTj} - \frac{\text{Zündabstand}}{2} \text{ bis } \alpha_{OTj} + \frac{\text{Zündabstand}}{2}$$

und $\overline{\omega_{Sj}}$ = Mittelwert von $\omega_{S(\alpha)}$ - maximal im Intervall von

$$\alpha_{OTj} - \frac{\text{Zündabstand}}{2} \text{ bis } \alpha_{OTj} + \frac{\text{Zündabstand}}{2}$$

Mit dieser Mittelung (im maximalen Intervall) wurden die delta_pe* Werte in Fig. 5 berechnet und den pi Abweichungen aus Fig. 2 gegenübergestellt. Dabei wurde für

$$delta_pe^*_om_S_j = \frac{1}{Vh} \cdot \frac{\overline{I_S}}{2}\left(\overline{\omega}_{Sj+1}^{\,2} - \overline{\omega}_j^{\,2}\right) \text{.......................................................... Gl. 16}$$

angesetzt, was zu einem unakzeptabel falschen Bild von der aktuellen Einzelzylinderleistung führt.

Weiters gilt für

$$delta_pe^*_om_S__M_außen_j = \frac{1}{Vh} \cdot \left[\frac{\overline{I_s}}{2}\left(\overline{\omega_{Sj+1}}^2\right) - \left(\overline{\omega_{Sj}}^2\right) - \int_{\alpha_{OTj}}^{\alpha_{OTj-1}} M_Abw_{(\alpha)} \cdot d\alpha\right] \text{ Gl. 17}$$

und man sieht die entscheidende Verbesserung des Resultats im Vergleich zur Referenz (delta_pi).
Es ist daher mit der hier präsentierten Methodik ohne weiters möglich, auch kleine Änderungen im Beitrag einzelner Zylinder zum Motorgesamtdrehmoment zu erkennen. Die Maßgröße ist absolut vergleichbar mit Abweichungen im indizierten Mitteldruck [bar] und ist weiters auf keinerlei spezielle Betriebsbedingungen der Verbrennungskraftmaschine eingeschränkt.

Ein schwankendes Lastmoment ist in vielen Fällen z.B. auch bei Schiffsmotoren gegeben, und zwar nicht nur bei den Hilfsaggregaten, beispielsweise zum Antrieb von Kompressoren oder Pumpen, sondern auch bei den Hauptantriebsmotoren. Ladung, Seegang und Wassertiefe sind unter anderem Faktoren, die die Propeller-Charakteristik beeinflussen, sodaß die Propellerlast sowohl auf hoher See als auch in Küsten- und Binnengewässern keine eindeutige Funktion der Drehzahl ist.

Das hier vorgestellte Verfahren kann daher auch auf diesem Gebiet nutzbringend eingesetzt werden, beispielsweise in einem Gerät, mit dem die Einzelzylinderleistung ständig überwacht und/oder in gewissen Grenzen eingestellt wird.

In manchen Anwendungsfällen, z.B. am Prüfstand oder bei der on-board-Anwendung, kann es vorteilhaft sein, einen eigenen Drehmomentensensor einzusparen und statt dessen einen zusätzlichen Winkelgeschwindigkeitsverlauf lastseitig von einem elastischen Element zu messen (z.B. "om_B" in Fig. 3).
Bei bekannter Federkonstante kann aus dem absoluten Verdrehwinkel zwischen Schwungrad- und Lastseite einer elastischen Kupplung das Drehmoment angenähert werden:

$$M_{außen(\alpha)} \cong c\left[\left(\alpha_{B(\alpha)} - \alpha_{S(\alpha)}\right) - \Delta\alpha_0\right] \quad \text{Gl. 18}$$

mit

$\alpha$ .....Bezugswinkel = $\alpha_S$
C .....Federkonstante des elastischen Elementes

$$\alpha_{B(\alpha)} = \alpha_{B0} + \int_{t_0}^{t_{(\alpha)}} \omega_B \cdot dt \quad \text{Gl. 19}$$

mit

$\alpha_{B0}$ .....absoluter Drehwinkel auf der Bremsen- bzw. Lastseite zur Zeit t = 0

$\Delta\alpha_0$ ...... Differenzwinkel zwischen den Meßstellen, wenn das übertragene Drehmoment 0 ist.

Zur Bestimmung des absoluten Differenzwinkels ist es erforderlich, auf beiden Meßstellen einen Bezugspunkt zu erfassen. Dies kann durch eine eigene Triggermarke, ebenso wie durch einen unregelmäßigen Markenabstand zwischen den Meßmarken, an mindestens einer Stelle am Umfang geschehen.
Weil die Federkonstanten von Kupplungen oft unlinear sind, und auch Schaltkupplungsbeläge für die grobe Erfassung des dynamischen Lastverlaufs in Frage kommen, wird erfindungsgemäß die folgende Selbstkalibrierungsprozedur vorgeschlagen:

Es wird davon ausgegangen, daß zwar die Federcharakteristik über dem Verdrehwinkel des elastischen Elements grundsätzlich bekannt ist, sich aber im Laufe der jahrelangen Benutzung bzw. mit der Temperatur langsam ändern kann.
Hingegen ist der mittlere Verdrehwinkel $\Delta\alpha_0$ nach jedem Kupplungsvorgang - wie er sowohl im Fahrzeug als auch am Produktionsprüfstand auftritt (wenn ein neuer Motor an die Belastungseinrichtung angekoppelt wird) - vollkommen unbekannt. Das heißt, dann ist pe* zwar nach Gl. 14 lösbar - also mit Hilfe des dynamischen Anteils am Motordrehmoment (M_Abw$_{außen}$) aber um $M_{außen}$ (mit Gl. 18) mit unbekanntem Offset ($\Delta\alpha_0$ = 0!) bestimmen zu können, ist zumindest eine lineare Federcharakteristik bzw. die Kenntnis der Federkonstanten bei der entsprechenden Belastung Voraussetzung. Der unbekannte Offsett, der durch die willkürliche Annahme ($\Delta\alpha_0 = 0$) entsteht, spielt keine Rolle, weil ja durch Anwendung von Gl. 3 und 4 nur der dynamische Anteil des Motordrehmoments ausgewertet wird.

Dabei können zwar - in erster Näherung - ohne weiters die c-Werte herangezogen werden, die vor kurzer Zeit gültig waren (z.B. vor 5 Minuten) - es ist aber nicht möglich, die Federcharakteristiken von Kupplungsbelägen oder Prüfstandskupplungen einmalig und unabhängig von der Temperatur festzuschreiben.
Daher wird fortlaufend die Federkonstante nach der folgenden Methodik selbstkalibrierend bestimmt:

Es wird nach jedem Einkupplungsvorgang für jeden Motorzyklus

- der Mittelwert vom momentanen absoluten Verdrehwinkel bestimmt:

$$\overline{\Delta\alpha_{B,S}} = \frac{1}{Zykluslänge} \cdot \int_{Zyklus} \left(\alpha_{B(\alpha)} - \alpha_{S(\alpha)}\right) \cdot d\alpha \quad \text{Gl. 20}$$

Dieser Winkel setzt sich aus dem unbekannten Offset der Triggermarken ($\Delta\alpha_0$) und dem realen, mittleren Verdrehwinkel ($\overline{\Delta\alpha_c}$) zusammen:

$$\Delta\alpha_{B,S} = \overline{\Delta\alpha_0} + \overline{\Delta\alpha_c} \quad \text{Gl. 21}$$

Weiters wird

- das mittlere Lastmoment, mit dem der Motor betrieben wurde ($\overline{M}$ wird hierpositiv, wenn der Motor belastet ist), aus einem anderen Signal (z.B. Regelstangenposition, Luftmasse, Prüfstandsbremse oder nach WO 93/22468) ermittelt.

Zur aktuellen Nachkalibrierung der Federkonstanten geht man bei der Differenzwinkelmessung über ein linear-elastisches Element vom Hook'schen Gesetz aus:

$$c \cdot \overline{\Delta\alpha_c} = -\overline{M} + \overline{I_S} \cdot \overline{\dot{\omega}_S} \quad \text{Gl. 22}$$

Wobei mit

$$\overline{\dot{\omega}_S}$$

die mittlere Motorbeschleunigung im betrachteten Zyklus gemeint ist. In Gl. 22 sind sowohl c als auch $\Delta\overline{\alpha_c}$ bzw. nach Gl. 21 $\Delta\alpha_0$ unbekannt. Im folgenden wird beispielsweise für die ersten 5 Motorzyklen nach Beendigung des Kupplungsvorganges der absolute Verdrehwinkel $\Delta\alpha_0$ ermittelt:

$$\Delta\alpha_0 = \overline{\Delta\alpha_{B,S}} + \frac{\overline{M} - \overline{I_S} \cdot \overline{\dot{\omega}_S}}{c} \quad \text{Gl. 23}$$

Dabei wird für c der zuletzt gültige Wert der Federkonstanten eingesetzt.

Der Mittelwert aus diesen 5 $\Delta\alpha_0$-Werten bildet den Ausgangspunkt für die weitere laufende Kalibrierung:
In den folgenden Motorzyklen wird aus Gl. 21 iterativ der aktuelle c-Wert und dann wieder $\Delta\alpha_0$ bestimmt, und diese Werte werden vorzugsweise mit einer gewichteten Mittelwertbildung mit den jeweiligen Vergangenheitswerten verknüpft und so in bezug auf langsame Veränderungen der Federkonstanten ständig am aktuellen Stand gehalten.
Diese Adaptierung wird sofort unterbrochen, wenn die Bedingung der Periodizität von $\Delta\alpha_{B,S}$ über dem Motorzyklus nicht mehr erfüllt ist - also wenn Schlupf auftritt, was typischerweise beim Auskuppeln im Fahrzeugbetrieb geschieht. Dann werden die bisherigen Werte von $\Delta\alpha_0$ ungültig, der aktuelle Wert für die Federkonstante c stellt aber den Ausgangswert für den nächsten eingekuppelten Zustand dar.
Die Überwachung eines allfälligen Kupplungsschlupfes kann bei Fahrzeuganwendungen vorteilhafterweise auch zur frühzeitigen Erkennung von Kupplungsverschleiß genutzt werden, und zwar dann, wenn bei andauernd hoher Last Schlupf festgestellt wird.

Bei nichtlinearen elastischen Elementen werden Federkonstanten vorzugsweise in Abhängigkeit von der Höhe des Drehmomentes in der Kupplung

$$\left(\overline{M} - I_S \overline{\dot{\omega}_S}\right)$$

abgespeichert. Als Vorgangsweise bei der Nachkalibrierung wird folgendes vorgeschlagen: die Werte für $\overline{\Delta\alpha_{B,S}}$ und

$$\left(\overline{M} - I_S \overline{\dot{\omega}}\right)$$

werden nach jedem Einkupplungsvorgang über eine Vielzahl von Arbeitsspielen (z.B. 200) aufgezeichnet, wobei zumindest bei tiefen und bei hohen Lasten eine entsprechende Anzahl von Wertepaaren (jeweils ca. 25 % der Gesamtanzahl) vorliegen soll. In diese Punkteschar wird ein Polynom, das der Grundcharakteristik der Kupplung entspricht, z.B. mit Hilfe der "Methode der kleinsten Quadrate" eingepaßt:

Beispielsweise kann ein quadratisches Polynom angesetzt werden:

$$\left(\overline{M} - I_S \overline{\dot{\omega}_S}\right) = a_0 + a_1 \cdot \Delta\alpha_{B,S} + a_2 \cdot \Delta\alpha_{B,S}{}^2 \quad \text{G. 24}$$

Aus dem Einpaßvorgang ergeben sich Werte für $a_0$, $a_1$ und $a_2$.

Als "Federkonstanten" für die entsprechender

$$\left(\overline{M} - I_S \overline{\dot{\omega}_S}\right)$$

-Werte findet man die Ableitung dieses Polynomes also

$$c_{(\Delta\alpha_{B,S})} = \frac{d\left(\overline{M} - \overline{I_S}\overline{\dot{\omega}_S}\right)}{d\left(\Delta\alpha_{B,S}\right)} = a_1 + 2a_2 \cdot \Delta\alpha_{B,S} \quad \text{Gl. 25}$$

Die berechneten Federkonstanten werden in weiterer Folge als gewichtete Mittelwerte mit den Vergangenheitswerten abgespeichert. - Die Gültigkeit des Polynomkoeffizienten ist jeweils auf einen eingekuppelten Zustand eingeschränkt. Die Werte der Federkonstanten in Abhängigkeit von der augenblicklichen Motorlast bleiben dagegen gültig, bis im Hintergrund eine aktualisierte Kalibrierung abgeschlossen wurde. Damit ist auch im Fall des nichtlinearen, elastischen Zwischenelements eine fortlaufende Bestimmung des Einzelzylinderdrehmoments möglich. Diese Vorgangsweise ist natürlich auch im Falle von linear-elastischen Elementen anwendbar.

Mit diesen selbstkalibrierenden Methoden kann also bereits aus zwei Winkelgeschwindigkeitsmessungen, und zwar vorzugsweise am Schwungrad und in Richtung Last nach einem elastischen Element (Zweimassenschwungrad, Kupplungsbelag, elastische Kupplung, lange Stahlwelle usw.) eine absolute Bewertung der Abweichungen in den Einzelzylinderdrehmomenten von deren Mittelwert realisiert werden, und zwar in so guter Qualität, daß damit auch eine Zylindergleichstellung möglich ist. Rückwirkungen vom Antriebsstrang her, wie beispielsweise "Ruckeln" oder Torsionsschwingungen, verfälschen das Ergebnis nicht.

Die gleiche Methodik - die Kombination von Drehmoment - und Winkelgeschwindigkeitsmessung kann aber auch eingesetzt werden, wenn die Systemgrenze - und damit der Ort der Drehmomentmessung - unmittelbar vor das Schwungrad verlegt wird. Damit verlagert sich der Informationsgehalt über die Gaskraftwirkung zu einem größeren Teil in das Drehmomentensignal. Die Winkelgeschwindigkeit, gemessen an einem Ort, der starr mit der Drehmomentenmeßstelle verbunden ist, verliert an Bedeutung, was durch einen reduzierten Wert für das Motorträgheitsmoment - das Schwungrad ist dann ja außerhalb des betrachteten Systems - in die Gleichungen 9, 12 oder 14 Eingang findet. Diese Vorgangsweise bietet den Vorteil für "on board"-Anwendungen, daß der Drehmomentsensor, vorzugsweise gleich kombiniert mit dem Winkelgeschwindigkeitssensor, direkt in die Kurbelwelle eingebaut werden kann. Dazu eignen sich beispielsweise Drehmomentmeßeinrichtung auf magnetisch induktiver Basis. Weiters kann das Auswerteverfahren in Hinblick auf Einzelzylinderleistung direkt in die Drehmomentenauswerteelektronik integriert werden, so daß dem Motormanagementsystem beispielsweise

- ein Signal für die Winkellage
- ein Signal für den Mittelwert des Drehmoments über einen Motorzyklus und
- ein Signal für das letzte Einzelzylinderdrehmoment

direkt von einer "intelligenten Sensoreinheit" geliefert werden.

Zur Gleichstellung von Einzelzylindereinspritzmengen wird weiters eine Einrichtung vorgestellt, die die Winkelgeschwindigkeit und das Drehmoment mißt.

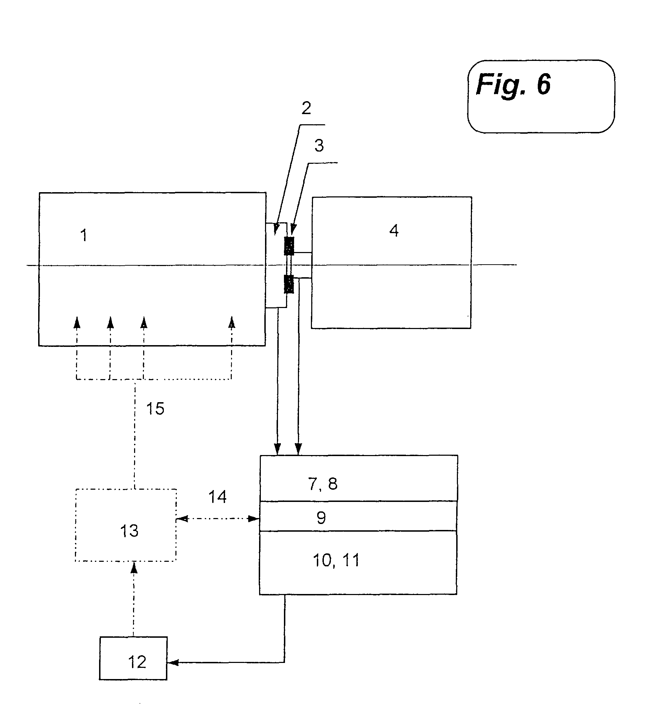

Dazu zeigt Fig. 6 eine bevorzugte Ausgestaltungsform, die hier beispielsweise in einem Regelkreis zur Gleichstellung von Einzelzylindereinspritzmengen eingesetzt wird:

Eine Brennkraftmaschine 1 treibt über ein Schwungrad 2 und über ein elastisches Zwischenelement 3 eine Belastungseinrichtung 4 an. Es werden sowohl schwungeradseitig 5 als auch lastseitig 6 vom elastischen Zwischenelement die Winkelverläufe (ca. 30 bis 200 Marken) sowie jeweils eine Bezugsmarke (Trigger oder ein unregelmäßiger Markenabstand) zeitlich vermessen.

In einer Winkelgeschwindigkeitsberechnungseinheit 7 und in einer Drehmomentenberechnungseinheit 8 werden die Ausgangswerte zur Berechnung der Einzelzylinderdrehmomentwerte bereitgestellt. Dabei wird in der Selbstkalibriereinrichtung 9 fortlaufend die Federkonstante aktualisiert und der Schlupf überwacht. Über eine Datenschnittstelle 14 zur Motorsteuerungselektronik 13 kann sowohl "unüblicher Schlupf" gemeldet als auch "der aktuelle mittlere Drehmomentenwert" erhalten werden. Weiters wird in einer Einzelzylinderdrehmomentenberechnungseinheit 10 eine Diagnosekenngröße berechnet, die vorzugsweise noch mit einem Korrekturkennfeld 11 um zylinderspezifische Fehler bereinigt wird, sodaß man für jeden Zylinder ein Einzelzylinderdrehmomentenmaß 12 erhält. Dieses Maß ist so genau, daß es beispielsweise ohne weiteres mit Hilfe der Motorsteuerungselekronik 13 dazu eingesetzt werden kann, die Signale zur Kraftstoffmengenansteuerung für jeden Zylinder 15 zu regeln.

## Patentansprüche

1. Diagnoseverfahren für mehrzylindrige Brennkraftmaschinen (1), wobei an zumindest einem kurbelgetriebenen Bauteil (2) der Brennkraftmaschine (1) für definierte Kurbelwinkelstellungen ($\alpha$) Winkelgeschwindigkeiten ($\omega$) aufgenommen und daraus unter Berücksichtigung des jeweils wirksamen Gesamtträgheitsmomentes (I ($\alpha$)) die jeweiligen Gesamtenergien (E) bzw. dadurch repräsentierte Diagnosekenngrößen, wie insbesonders - Einzelzylinder-Leistungsgrößen ($pe^*_j$), bestimmt werden, **dadurch gekennzeichnet, daß** zusätzlich zu der bzw. den Winkelgeschwindigkeitsmessung(en) zumindest eine drehwinkel- oder zeitaufgelöste Drehmomentmessung an einer abtriebsseitigen Systemgrenze vorgenommen und der dadurch repräsentierte jeweilige Energietransport über diese Systemgrenze bei der Bestimmung der Diagnosekenngrößen berücksichtigt wird.

2. Diagnoseverfahren nach Anspruch 1, **dadurch gekennzeichnet, daß** zur Drehmomentmessung der jeweilige Verdrehwinkel ($\alpha$) zwischen einem auf der Kurbelwelle der Brennkraftmaschine (1) angeordneten Schwungrad (2) und einer nachgeschalteten Belastungseinrichtung (4) gemessen und zusammen mit der Federkonstanten eines zwischen Schwungrad (2) und Belastungseinrichtung (4) liegenden elastischen Antriebsstrangs ausgewertet wird.

3. Diagnoseverfahren nach Anspruch 2, **dadurch gekennzeichnet, daß** die Kalibrierung der Federkonstanten an Hand des mittleren Verdrehwinkels und eines zusätzlichen Maßes für den Mittelwert der Motorlast erfolgt.

4. Diagnoseverfahren nach Anspruch 2 oder 3, **dadurch gekennzeichnet, daß** die Verdrehwinkelmessung über einen Schaltkupplungsbelag erfolgt, und daß bei dauerhaft auftretendem Schlupf bei hoher Last ein frühzeitiger Kupplungsverschleiß diagnostiziert wird.

5. Diagnoseverfahren nach einem oder mehreren der Ansprüche 1 bis 4, **dadurch gekennzeichnet, daß** Differenzverläufe zwischen den Verläufen der korrigierten Diagnosekenngrößen der jeweils geprüften und einer als gut befundenen Brennkraftmaschine ausgewertet werden.

**6.** Diagnoseverfahren nach einem oder mehreren der Ansprüche 1 bis 5, **dadurch gekennzeichnet, daß** zur Entscheidung ob ein Fehler vorliegt, statistische Hilfsmittel - wie z.B. Gutzustandsstreubänder - herangezogen werden.

**7.** Diagnoseverfahren nach einem oder mehreren der Ansprüche 1 bis 6, **dadurch gekennzeichnet, daß** der Ausgleich von höherfrequenten Torsionsschwingungen innerhalb des Kurbeltriebes mit Hilfe einer tiefpaßgefilterten Schwungradwinkelgeschwindigkeit erfolgt.

**8.** Diagnoseverfahren nach einem oder mehreren der Ansprüche 1 bis 7, **dadurch gekennzeichnet, daß** nach der Berechnung eines zunächst durch hochfrequente Kurbelwellendrehschwingungen verfälschten Einzelzylinderdrehmomentmaßes eine Korrektur der Ergebnisgröße mit einem Korrekturkennfeld vorgenommen wird.

**9.** Diagnoseverfahren nach einem oder mehreren der Ansprüche 1 bis 8, **dadurch gekennzeichnet, daß** aus den Verläufen von korrigierten Einzelzylinder-Diagnosekenngrößen Zündaussetzer einzelner Zylinder bestimmt werden.

**10.** Diagnoseverfahren nach einem oder mehreren der Ansprüche 1 bis 9, **dadurch gekennzeichnet, daß** die Brennkraftmaschine dabei zündungslos geschleppt wird.

**11.** Diagnoseverfahren nach einem oder mehreren der Ansprüche 1 bis 10. **dadurch gekennzeichnet, daß** mindestens ein Winkelgeschwindigkeitsverlauf im Bereich eines modalen Schwingungsknotens der Kurbelwellen aufgenommen wird.

**12.** Verfahren zur Erst-Einstellung einer Brennkraftmaschine **dadurch gekennzeichnet, daß** auf einem Produktionsprüfstand mittels eines Diagnoseverfahrens nach einem oder mehreren der Ansprüche 1 bis 11 korrigierte Diagnosekenngrößen ermittelt werden und mit Hilfe dieser Diagnosekenngrößen eine Grundeinstellung von geprüften Serien-Brennkraftmaschinen vorgenommen wird.

**13.** Verfahren zur bedarfsweisen Nach-Einstellung einer Brennkraftmaschine, **dadurch gekennzeichnet, daß** auf einer Belastungseinrichtung bzw. on-board mittels eines Diagnoseverfahrens nach einem oder mehreren der Ansprüche 1 bis 11 korrigierte Einzelzylinder-Diagnosekenngrößen ermittelt werden und mit Hilfe dieser Diagnosekenngrößen eine Einstellung von Einzelzylinder-Einspritzmengen auf einen Zielwert vorgenommen wird.

**14.** Diagnoseverfahren nach einem oder mehreren der Ansprüche 1 bis 11, **dadurch gekennzeichnet, daß** zur Steuerung bzw. Regelung einer im Betrieb befindlichen Brennkraftmaschine eine adaptive Einstellung von Parametern und/oder Zielwerten der Steuerung bzw. Regelung mit Hilfe der on-board ermittelten korrigierten Einzelzylinder-Diagnosekenngrößen vorgenommen wird.

**15.** Einrichtung zur Diagnose mehrzylindriger Brennkraftmaschinen (1), mit zumindest einer Meßeinheit (3, 7) zur Bestimmung von Winkelgeschwindigkeiten ($\omega$) an einem kurbelgetriebenen Bauteil (2) der Brennkraftmaschine und einer damit in Verbindung stehenden Auswerteeinheit (9-12), in der unter Berücksichtigung von kurbelwinkelabhängigen Gesamtträgheitsmomenten ($I(\alpha)$) Diagnosekenngrößen, wie insbesonders Einzelzylinder-Leistungsgrößen ($pe^*_j$), ermittelt werden, **dadurch gekennzeichnet, daß** zumindest eine weitere Meßeinheit (3, 8) zur drehwinkel- oder zeitaufgelösten Drehmomentmessung an einer abtriebsseitigen Systemgrenze vorgesehen und ebenfalls mit der Auswerteeinheit verbunden ist.

**16.** Einrichtung nach Anspruch 15, **dadurch gekennzeichnet, daß** die weitere Meßeinheit (3, 8) zur Drehmomentmessung mit der Meßeinheit (3, 7) zur Winkelgeschwindigkeitsmessung zusammengefaßt ist.

**17.** Einrichtung nach Anspruch 15 oder 16, **gekennzeichnet, durch** eine Verbindung mit einem Motormanagementsystem (13) zur adaptiven Einstellung von Parametern und/oder Zielwerten für die Steuerung bzw. Regelung der Brennkraftmaschine (1).

## Claims

1. Diagnostic method for multi-cylinder internal combustion engines (1), angular velocities ($\omega$) being picked up at at least one crankshaft-driven component (2) of the engine (1) for defined crankshaft positions ($\alpha$) and from them, taking into account the respective effective total moment of inertia ($I(\alpha)$), the respective total energy (E) or diagnostic magnitudes thereby represented, such as in particular individual cylinder performance magnitudes ($pe^*_j$) are determined, **characterised in that** in addition to the angular velocity measurement or measurements at least one angle-specific or time- specific torque measurement is performed at a system boundary on the output side and the respective energy transfer across this system boundary thereby represented is taken into account in the determination of the diagnostic magnitudes.

2. Diagnostic method according to Claim 1, **characterised in that** for measuring torque the respective angle of displacement ($\alpha$) between a flywheel (2) mounted on the crankshaft of the engine (1) and a load-absorbing device (4) which follows it is measured and, together with the spring constants of an elastic drive train lying between flywheel (2) and load-absorbing device (4), is evaluated.

3. Diagnostic method according to Claim 2, **characterised in that** the calibration of the spring constants is performed in conjunction with the mean angle of displacement and an additional measure of the mean value of the engine load.

4. Diagnostic method according to Claim 2 or 3, **characterised in that** the measurement of angular displacement is performed through a clutch lining, and **in that** an early presence of clutch wear is diagnosed on continuously present slip at high load.

5. Diagnostic method according to one or more of Claims 1 to 4, **characterised in that** difference behaviour between the behaviours of the corrected diagnosed characteristic magnitudes of the respective engine under test and an engine known to be good are evaluated.

6. Diagnostic method according to one or more of Claims 1 to 5, **characterised in that** for the decision on whether a fault is present, statistical methods - such as quality standard deviation bands - are employed.

7. Diagnostic method according to one or more of Claims 1 to 6, **characterised in that** the balancing out of high frequency torsional vibrations within the crankshaft drive is performed with the aid of a lowpass-filtered flywheel angular velocity.

8. Diagnostic method according to one or more of Claims 1 to 7, **characterised in that** after the calculation of an individual cylinder torque measurement initially falsified by high frequency crankshaft angular vibrations, a correction of the resulting magnitudes is performed using a correction characteristic pattern.

9. Diagnostic method according to one or more of Claims 1 to 8, **characterised in that** ignition faults in individual cylinders are detected from the behaviours of corrected individual cylinder diagnostic characteristic magnitudes.

10. Diagnostic method according to one or more of Claims 1 to 9, **characterised in that** the engine is motored without ignition.

11. Diagnostic method according to one or more of Claims 1 to 10, **characterised in that** at least one angular velocity behaviour is picked up in the region of a modal vibration node of the crankshaft.

12. Method for the initial setting up of an internal combustion engine **characterised in that** on a production test stand by means of a diagnostic method according to one or more of Claims 1 to 11 corrected diagnostic characteristic magnitudes are determined, and with the aid of these diagnostic characteristic magnitudes a basic adjustment of series-produced engines which are tested is performed.

13. Method for subsequent adjustment, as required, of an internal combustion engine, **characterised in that** on a load-absorbing device or on board the vehicle, by means of a diagnostic method according to one or more of Claims 1 to 11, corrected individual cylinder diagnostic characteristic magnitudes are determined, and with the aid of these diagnostic characteristic magnitudes an adjustment of individual cylinder injection quantities to a target value is performed.

**14.** Diagnostic method according to one or more of Claims 1 to 11, **characterised in that** for controlling or adjusting an internal combustion engine which is in operation an adaptive adjustment of the parameters and/or target values of the control or adjustment is performed with the aid of corrected individual cylinder diagnostic characteristic magnitudes determined on-board.

**15.** Apparatus for diagnosing multi-cylinder internal combustion engines (1), with at least one measuring unit (3, 7) for determining angular velocities (ω) on a crankshaft-driven component (2) of the engine and an evaluating unit (9-12) which is connected to it and in which, taking account of crankshaft-dependent total moments of inertia (I(α)) diagnosed characteristic magnitudes, such as in particular individual cylinder performance magnitudes ($pe^*_j$) are determined, **characterised in that** at least one further measuring unit (3, 8) is provided at an output-side system boundary for angle-specific or time-interval-specific torque measurement and is likewise connected to the evaluating unit.

**16.** Apparatus according to Claim 15, **characterised in that** the further measuring unit (3, 8) for measuring torque is combined with the measuring unit (3, 7) for measuring angular velocity.

**17.** Apparatus according to Claim 15 or 16, **characterised by** a connection with an engine management system (13) for the adaptive adjustment of parameters and/or target values for the control or adjustment of the engine (1).

**Revendications**

**1.** Procédé de diagnostic pour moteurs à combustion interne multi-cylindres (1), dans lequel des vitesses angulaires (ω) sont enregistrées pour des positions angulaires de vilebrequin définies (α) au niveau d'au moins une pièce structurelle (2) entraînée par le vilebrequin du moteur à combustion interne (1) à partir desquelles on détermine, en prenant en compte le moment d'inertie total agissant correspondant (I (α)),les énergies totales correspondantes (E) ou des paramètres de diagnostic représentés grâce à cela, comme en particulier la quantité de puissance d'un unique cylindre (pej), **caractérisé en ce que**, en plus des mesures de vitesses de rotation(s), on prend en compte lors de l'estimation des paramètres de diagnostic, au moins une mesure de couple en fonction de l'angle de rotation ou du temps enregistrée au niveau d'une frontière du système du côté de la prise de force et le transport d'énergie correspondant ainsi représenté.

**2.** Procédé de diagnostic selon la revendication 1, **caractérisé en ce que**, pour la mesure du couple, l'angle de rotation correspondant (α) est mesuré entre un volant d'inertie (2) disposé sur le vilebrequin du moteur à combustion interne (1) et un dispositif de chargement (4) raccordé en aval est estimé en lien avec la constante d'élasticité d'une barre de transmission élastique disposée entre le volant d'inertie (2) et le dispositif de charge (4).

**3.** Procédé de diagnostic selon la revendication 2, **caractérisé en ce que** le calibrage du coefficient d'élasticité est obtenu au moyen de l'angle de rotation médian et d'une quantité supplémentaire pour la valeur médiane de la charge motrice.

**4.** Procédé de diagnostic selon la revendication 2 ou 3, **caractérisé en ce que** la mesure d'angle de rotation est réalisée sur l'embrayage à garniture, et **en ce que** lors de l'apparition d'un glissement de longue durée sous bonne charge, une usure de l'embrayage prématurée est diagnostiquée.

**5.** Procédé de diagnostic selon l'une des revendications 1 à 4, **caractérisé en ce que** les différences d'évolution entre l'évolution des paramètres de diagnostic corrigés pour le moteur à combustion interne concerné et un moteur à combustion interne révélé comme bon sont calculées.

**6.** Procédé de diagnostic selon l'une ou plusieurs des revendications 1 à 5, **caractérisé en ce que**, pour la décision de l'existence ou non d'un problème, des moyens statistiques - comme par exemple des intervalles de dispersion des valeurs de bon état - sont utilisés.

**7.** Procédé de diagnostic selon l'une ou plusieurs des revendications 1 à 6, **caractérisé en ce que**, on réalise la compensation des vibrations de torsions aux fréquences supérieures à l'intérieur du mécanisme de bielle au moyen d'une vitesse angulaire du volant d'inertie filtrée en passe-bas.

**8.** Procédé de diagnostic selon l'une ou plusieurs des revendications 1 à 8, **caractérisé en ce que**, après le calcul d'un moment de cylindre unitaire faussé en premier lieu par les vibrations à hautes fréquences du vilebrequin, on met en oeuvre une correction de la quantité résultante au moyen d'un champ caractéristique de correction.

**9.** Procédé de diagnostic selon l'une ou plusieurs des revendications 1 à 8, **caractérisé en ce que**, après le calcul des paramètres de diagnostic du cylindre unitaire corrigés, les ratés d'allumage de cylindre unitaire sont déterminés.

**10.** Procédé de diagnostic selon l'une ou plusieurs des revendications 1 à 9, **caractérisé en ce que** le moteur à combustion interne est entraîné sans allumage durant le procédé.

**11.** Procédé de diagnostic selon l'une ou plusieurs des revendications 1 à 10, **caractérisé en ce que**, au moins une évolution de vitesses angulaires dans la zone d'un noeud de vibrations modal du vilebrequin est enregistrée.

**12.** Procédé pour la première mise en service d'un moteur à combustion interne, **caractérisé en ce que**, sur un poste de test de production, au moyen d'un procédé de diagnostic selon l'une ou plusieurs des revendications 1 à 11, des paramètres de diagnostic corrigés sont déterminés et au moyen de ces paramètres de diagnostic un réglage de base des moteurs à combustion interne testés fabriqués en série est mis en oeuvre.

**13.** Procédé pour le post-réglage en cas de besoin d'un moteur à combustion interne, **caractérisé en ce que**, sur un dispositif de charge ou sur un dispositif embarqué, au moyen d'un procédé de diagnostic selon l'une ou plusieurs des revendications 1 à 11, des paramètres de diagnostic corrigés de cylindre unitaire sont déterminés et au moyen de ces paramètres de diagnostic le réglage de quantité d'injection pour cylindre unitaire est fixé à une valeur cible.

**14.** Procédé de diagnostic selon l'une ou plusieurs des revendications 1 à 11, **caractérisé en ce que**, pour l'asservissement ou la régulation d'un moteur à combustion interne en fonctionnement, on met en oeuvre un réglage adaptatif de paramètres et/ou de valeurs cibles de l'asservissement ou de la régulation au moyen des paramètres de diagnostic de cylindre unitaire corrigés déterminés.

**15.** Dispositif de diagnostic pour moteurs à combustion interne multi-cylindres (1), avec au moins une unité de mesure (3,7) pour la détermination de vitesses angulaires ($\omega$) au niveau d'une pièce de structure entraînée par le vilebrequin (2) du moteur à combustion interne et d'une unité de mesure qui est en liaison avec celle-ci (9-12), dans laquelle par observation de moments d'inertie totaux (I ($\alpha$)) dépendante de l'angle de vilebrequin, des paramètres de diagnostic sont déterminés, comme en particulier les quantités de puissance de cylindre unitaire (pej), **caractérisé en ce qu'**au moins une autre unité de mesure (3-8) est prévue pour la mesure d'angle de rotation ou de moments en fonction du temps, au niveau d'une limite de système du côté entraîné et est en même temps reliée au dispositif d'estimation.

**16.** Dispositif selon la revendication 15, **caractérisé en ce que** l'unité de mesure (3-8) supplémentaire de mesure de couple est réalisée en bloc avec l'unité de mesure (3-7) de la mesure de vitesses angulaires.

**17.** Dispositif selon la revendication 15 ou 16, **caractérisé par** une liaison avec un système de gestion moteur (13) pour le réglage adaptatif de paramètres et/ou de valeurs cibles pour l'asservissement ou la régulation du moteur à combustion interne (1).

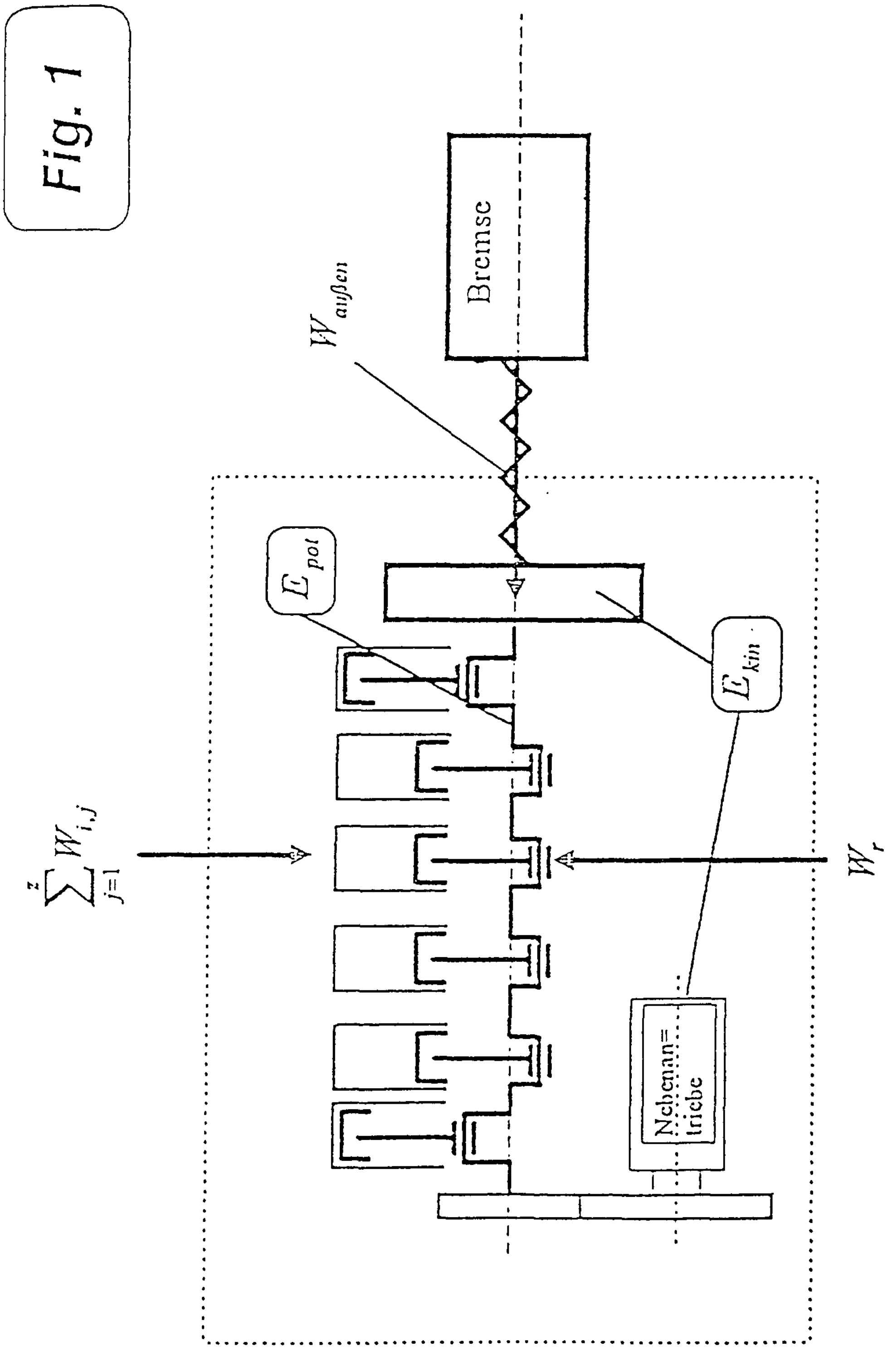


Fig. 1

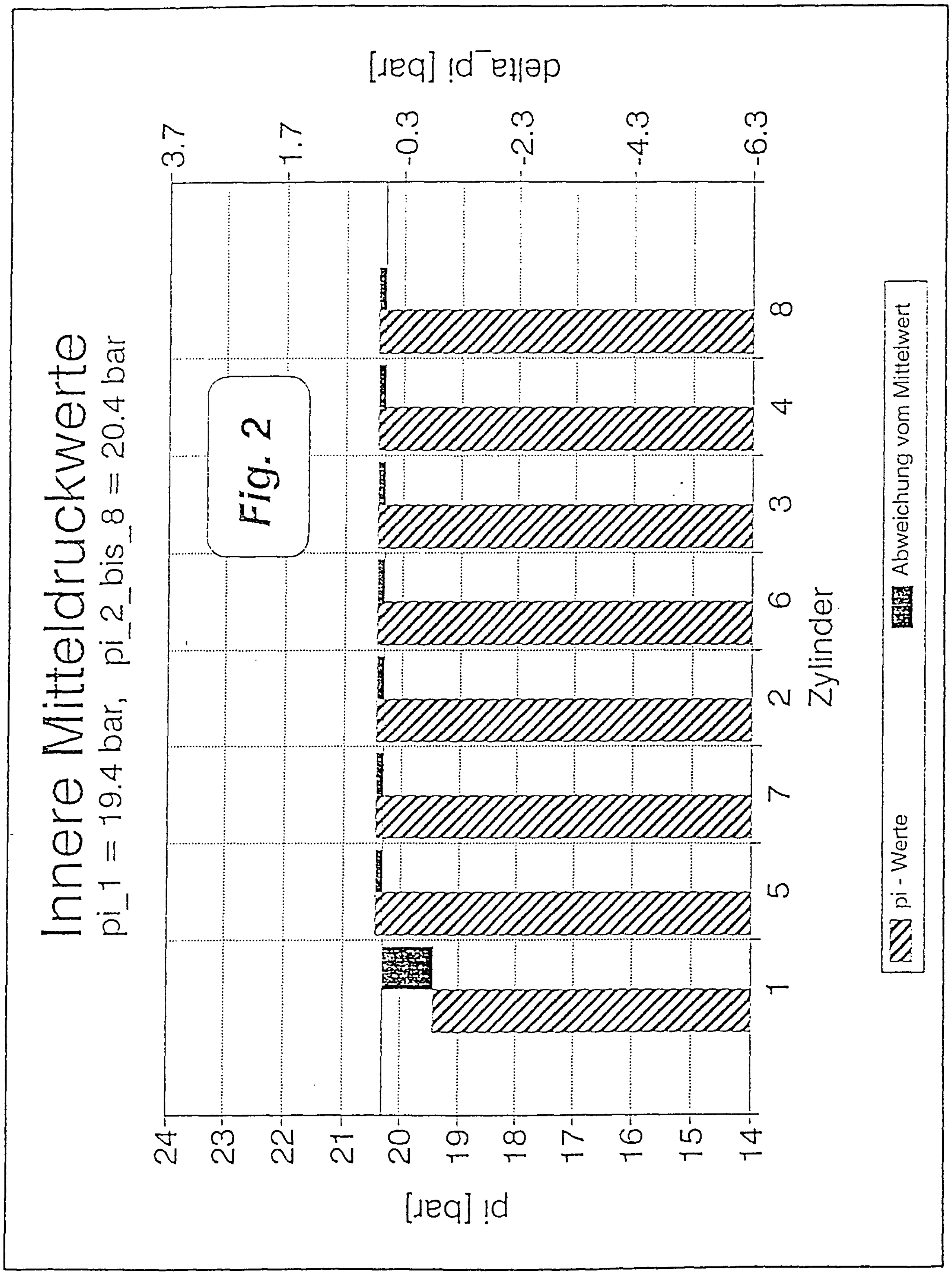
Innere Mitteldruckwerte
pi_1 = 19.4 bar, pi_2_bis_8 = 20.4 bar
pi [bar]
24
23
22
21
20
19
18
17
16
15
14
delta_pi [bar]
3.7
1.7
-0.3
-2.3
-4.3
-6.3
1
5
7
2
6
3
4
8
Zylinder
pi - Werte
Abweichung vom Mittelwert

Fig. 2

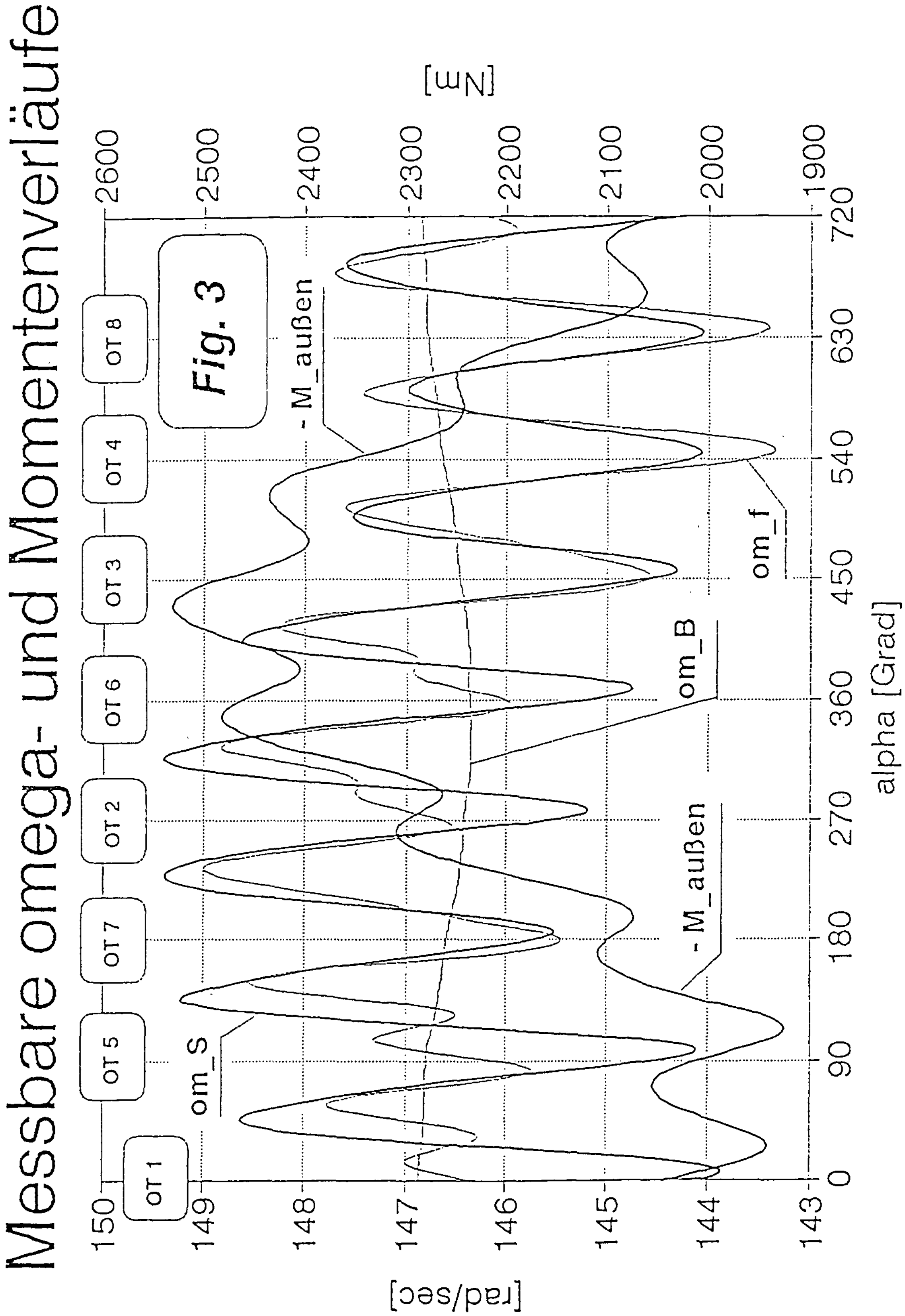
Messbare omega- und Momentenverläufe
Fig. 3
OT 1
OT 5
OT 7
OT 2
OT 6
OT 3
OT 4
OT 8
om_S
- M_außen
om_B
om_f
- M_außen
[rad/sec]
150
149
148
147
146
145
144
143
[Nm]
-2600
-2500
-2400
-2300
-2200
-2100
-2000
-1900
0
90
180
270
360
450
540
630
720
alpha [Grad]

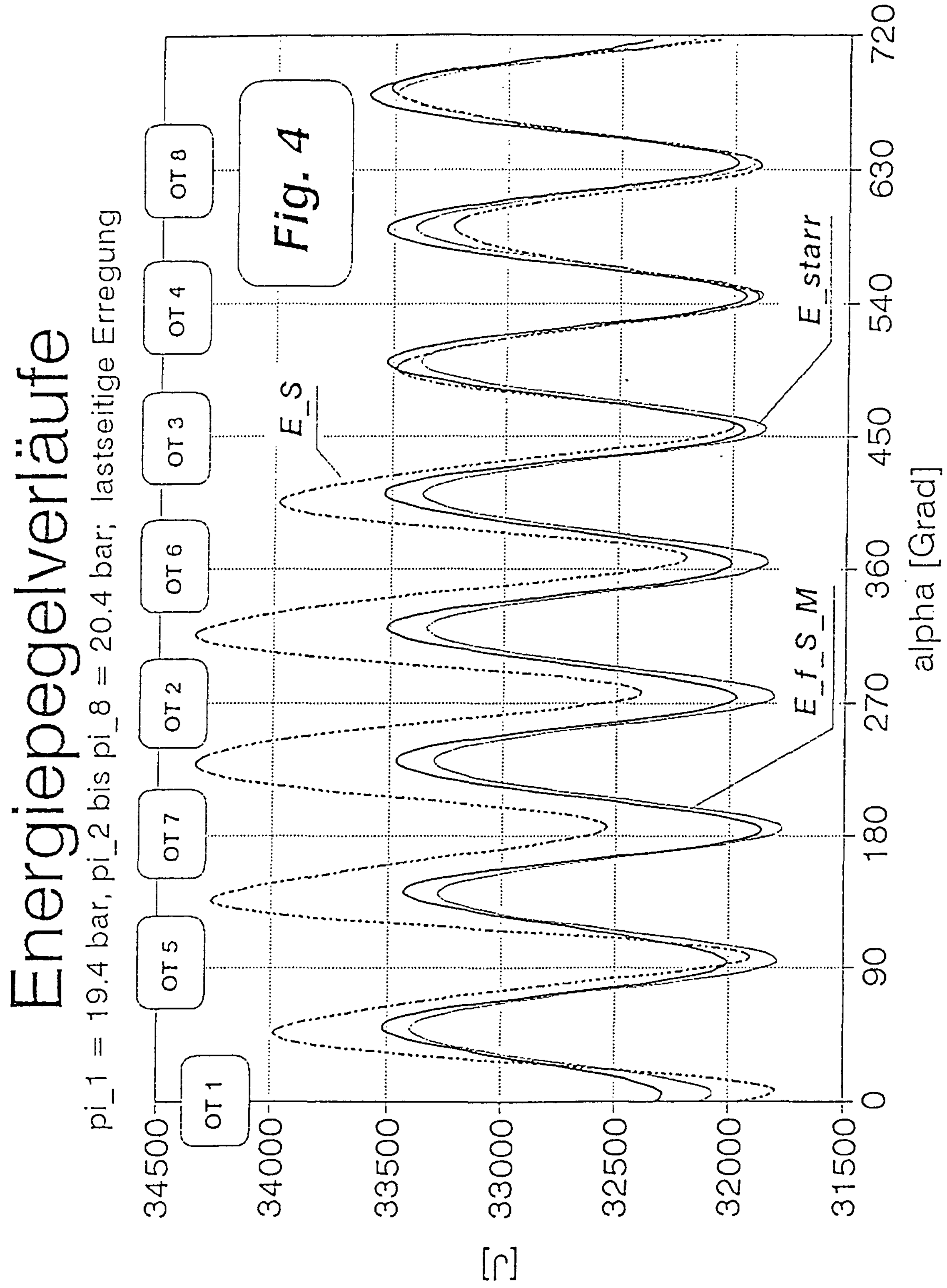
Energiepegelverläufe
pi_1 = 19.4 bar, pi_2 bis pi_8 = 20.4 bar; lastseitige Erregung
OT 1
OT 5
OT 7
OT 2
OT 6
OT 3
OT 4
OT 8
E_S
E_f_S_M
E_starr
34500
34000
33500
33000
32500
32000
31500
[J]
0
90
180
270
360
450
540
630
720
alpha [Grad]

Fig. 4

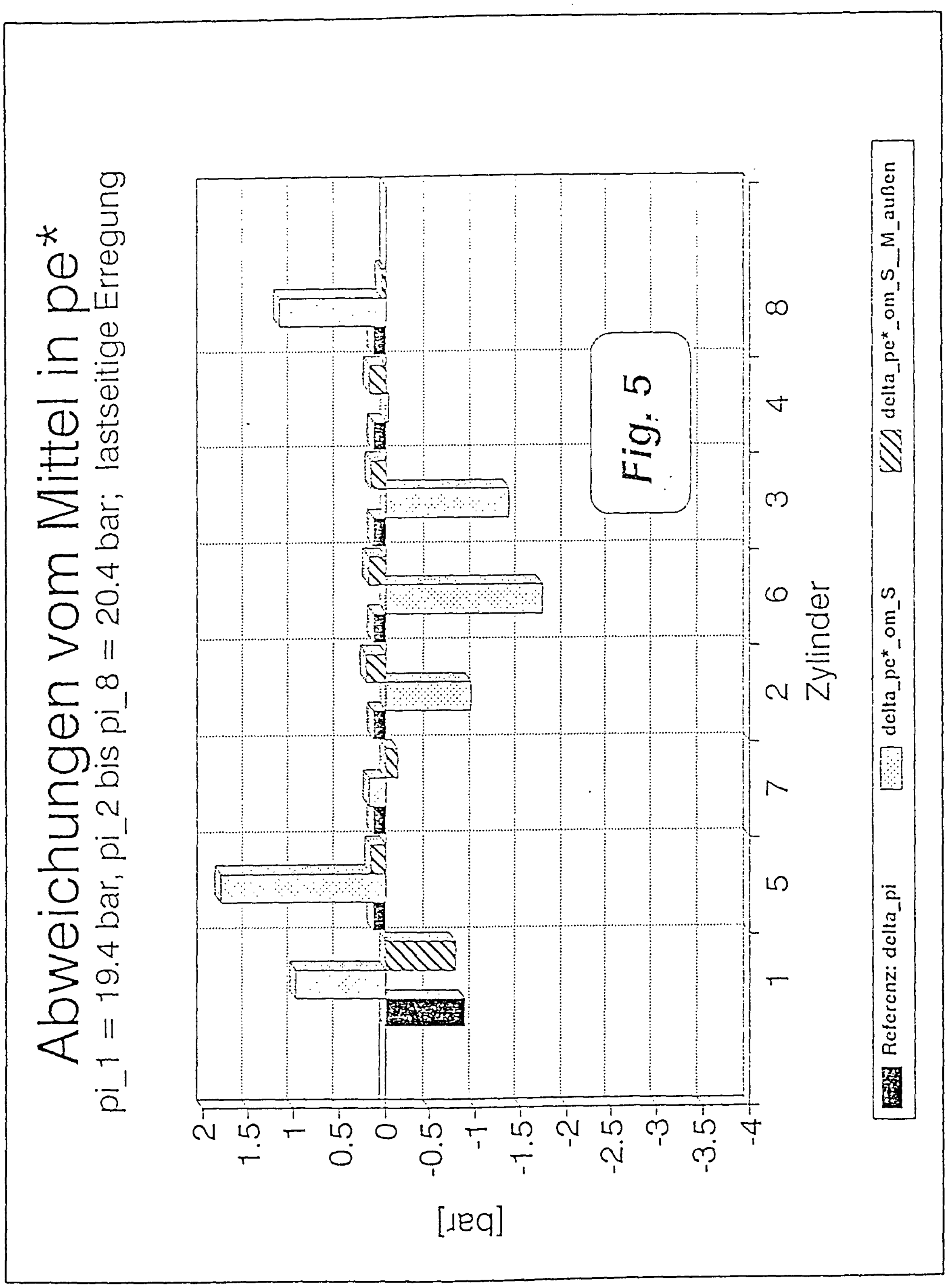
Abweichungen vom Mittel in pe*
pi_1 = 19.4 bar, pi_2 bis pi_8 = 20.4 bar; lastseitige Erregung
[bar]
2
1.5
1
0.5
0
-0.5
-1
-1.5
-2
-2.5
-3
-3.5
-4
1
5
7
2
6
3
4
8
Zylinder
Referenz: delta_pi
delta_pe*_om_S
delta_pe*_om_S__M_außen

Fig. 5

Fig. 6